**Europäisches Patentamt**

**European Patent Office**

**Office européen des brevets**

(19)

(11) Numéro de publication : **0 291 394 B1**

(12) # FASCICULE DE BREVET EUROPEEN

(45) Date de publication du fascicule du brevet :
**18.12.91 Bulletin 91/51**

(51) Int. Cl.⁵ : **G01B 11/02, G01B 11/06**

(21) Numéro de dépôt : **88401102.4**

(22) Date de dépôt : **05.05.88**

(54) **Capteur de déplacement à fibres optiques décalées.**

(30) Priorité : **11.05.87 FR 8706577**

(43) Date de publication de la demande :
**17.11.88 Bulletin 88/46**

(45) Mention de la délivrance du brevet :
**18.12.91 Bulletin 91/51**

(84) Etats contractants désignés :
**CH DE GB IT LI SE**

(56) Documents cités :
**CH-A- 455 304**
**DE-A- 3 619 923**
**US-A- 4 488 813**
**PATENT ABSTRACTS OF JAPAN, vol. 10, no. 7
(P-419)[2064], 11 janvier 1986; & JP-A-60 162
903 (JIYAPAN SENSAA KOOPOREISHIYON
K.K.) 24-08-1985**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**
Titulaire : **SICK-Optique-Electronique
Boulevard Beaubourg Z.I. Paris Est
F-77200 Emerainville (FR)**

(72) Inventeur : **Bois, Emmanuel
10, Résidence du Parc
F-91300 Massy (FR)**
Inventeur : **Huard, Serge
358, Avenue de la Coueste
F-13400 Aubagne (FR)**
Inventeur : **Boisde, Gilbert
30, rue Charles de Gaulle
F-91440 Bures sur Yvette (FR)**

(74) Mandataire : **Mongrédien, André et al
c/o BREVATOME 25, rue de Ponthieu
F-75008 Paris (FR)**

# Description

La présente invention concerne un capteur de déplacement à fibres optiques décalées. Elle permet notamment de déterminer le déplacement d'un objet optiquement réflecteur par rapport audit capteur et s'applique en particulier au contrôle de pièces mécaniques.

On connaît déjà des capteurs optiques permettant des mesures de déplacements. Ces capteurs connus utilisent des techniques interférométriques compliquées.

La présente invention a pour but de remédier à cet inconvénient.

On connaît déjà des capteurs de déplacement à fibres optiques par les documents CH-A-455304 et DE-A-3619923 ainsi qu'un système à fibres optiques pour la détermination de la position d'une cible réflectrice, par le document US-A-4488813.

L'invention a pour objet un capteur optique, pour déterminer le déplacement, par rapport à ce capteur, d'un objet optiquement réflecteur dans un domaine donné de longueurs d'ondes optiques, ledit capteur comprenant :

— une optique, l'objet étant destiné à être placé en regard d'une face de cette optique,

— une première et une seconde fibres optiques qui sont à des distances prédéterminées par rapport à l'optique et sont situées de part et d'autre de l'axe optique de ladite optique, et dont des extrémités respectives sont placées en regard de l'autre face de l'optique et sont décalées l'une par rapport à l'autre suivant ledit axe optique.

— des premiers moyens d'émission de lumière, de longueur d'onde appartenant audit domaine, et d'injection de cette lumière dans l'autre extrémité de la première fibre, en vue de l'envoyer sur l'objet par l'intermédiaire de l'optique,

— des premiers moyens de récupération de lumière et de détection de la lumière renvoyée à l'autre extrémité de la première fibre après réflexion sur l'objet, les premiers moyens de détection étant prévus pour fournir alors un premier signal électrique,

— des seconds moyens d'émission de lumière, de longueur d'onde appartenant audit domaine, et d'injection de cette lumière dans l'autre extrémité de la seconde fibre, en vue de l'envoyer sur l'objet par l'intermédiaire de l'optique,

— des seconds moyens de récupération de lumière et de détection de la lumière renvoyée à l'autre extrémité de la seconde fibre après réflexion sur l'objet, les seconds moyens de détection étant prévus pour fournir alors un second signal électrique, et

— des moyens électroniques de traitement de ces premier et second signaux, prévus pour déterminer à partir de ces derniers le déplacement de l'objet par rapport à l'optique.

Le capteur objet de l'invention permet d'effectuer des mesures de déplacements sans contact, qui peuvent être de grande précision. A cet effet, il utilise des techniques photométriques beaucoup plus simples que les techniques interférométriques.

Selon un mode de réalisation préféré du capteur objet de l'invention, le déplacement z de l'objet par rapport à l'optique est déterminé par les formules suivantes :

$$r.z = (A - B)/(A + B)$$
$$A = \phi 1/\phi 10$$
$$B = \phi 2/\phi 20$$

r étant une constante de proportionnalité, $\phi 1$ et $\phi 10$ désignant respectivement les flux lumineux reçus à l'autre extrémité de la première fibre pour un objet à une distance D et un objet à une distance S1, avec :
D = z + S1 et S1 = (S11 + S12)/2
S11 et S12 désignant respectivement les distances de l'optique aux plans images respectifs des extrémités des première et seconde fibres par l'optique, et $\phi 2$ et $\phi 20$ désignant respectivement les flux lumineux reçus à l'autre extrémité de la seconde fibre pour un objet à cette distance D et un objet à cette distance S1.

Les moyens électroniques de traitement peuvent être également prévus pour déterminer la distance D à partir de z et de S1.

Selon un mode de réalisation particulier du capteur objet de l'invention, les premiers moyens d'émission sont prévus pour moduler l'intensité de la lumière leur correspondant à une première fréquence, les premiers moyens de détection sont prévus pour effectuer une détection synchrone de cette lumière dont l'intensité est ainsi modulée, les seconds moyens d'émission sont prévus pour moduler l'intensité de la lumière leur correspondant à une seconde fréquence différente de la première fréquence, et les seconds moyens de détection sont prévus pour effectuer une détection synchrone de cette lumière dont l'intensité est modulée à la seconde fréquence.

Selon un autre mode de réalisation particulier, les premiers et seconds moyens d'émission sont prévus pour émettre respectivement des lumières dont les intensités sont modulées et sont en opposition de phase et les premiers et seconds moyens de détection sont prévus pour effectuer une détection synchrone des lumières respectivement émises par les premiers et seconds moyens d'émission.

Enfin, de manière avantageuse, le capteur objet de l'invention peut comprendre en outre des moyens de déplacement de l'optique parallèlement à son axe optique. On peut ainsi régler la mise au point de l'optique. Ceci joint à la possibilité de changer d'optique, permet d'ajuster à la fois la distance D de détection et la précision des mesures.

La présente invention sera mieux comprise à la lecture de la description qui suit, d'exemples de réalisation donnés à titre purement indicatif et nullement limitatif, en référence aux dessins annexés sur lesquels :

— la figure 1 représente schématiquement une fibre optique auto-collimatée par l'intermédiaire d'une optique et d'un objet optiquement réflecteur,

— la figure 2 est une vue schématique d'une partie d'un capteur conforme à l'invention,

— la figure 3 est une vue schématique d'un mode de réalisation particulier du capteur objet de l'invention, et

— la figure 4 est une vue schématique d'un autre mode de réalisation particulier de ce capteur.

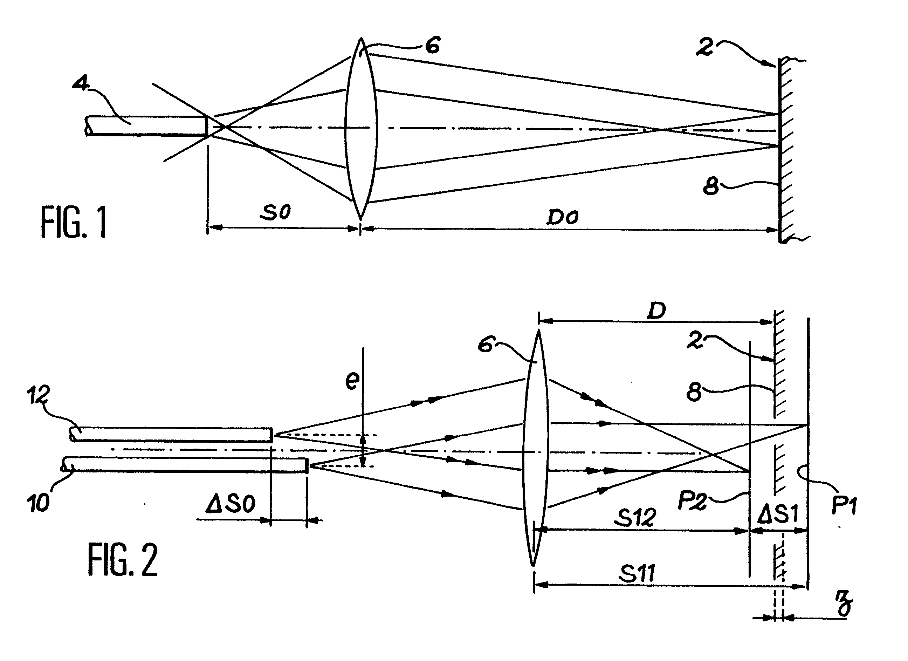

Sur la figure 1, on a représenté schématiquement un objet 2 optiquement réflecteur dans un domaine connu de longueurs d'ondes optiques, une fibre optique 4 et une optique 6.

Une extrémité de la fibre est en regard d'une face de l'optique et une portion de la fibre s'étendant à partir de ladite extrémité a son axe sensiblement confondu avec l'axe optique de l'optique 6.

L'objet est en regard de l'autre face de l'optique et comporte une surface optiquement réflectrice 8 plane et sensiblement perpendiculaire audit axe optique.

On injecte à l'autre extrémité de la fibre une lumière dont la longueur d'onde appartient audit domaine. L'optique, qui peut être une lentille convergente mince ou épaisse, est prévue pour focaliser cette lumière sur ladite surface de l'objet, sur laquelle elle se réfléchit pour repasser dans la fibre après avoir retraversé l'optique (auto-collimation).

La fibre recueille un maximum de lumière lorsque la relation suivante est vérifiée, en supposant que l'optique est une lentille mince convergente :

$$(1/SO) + (1/DO) = 1/F \quad (1)$$

relation dans laquelle SO et DO représentent respectivement la distance entre l'extrémité de la fibre et la lentille et la distance entre cette dernière et la surface de l'objet.

Dans la relation (1), la quantité F représente la distance focale de la lentille. Cette relation, valable pour une lentille mince convergente, l'est aussi pour toute optique -convergente, de distance focale F, en considérant alors que SO représente la distance entre ladite extrémité de la fibre et le plan principal-objet de l'optique, et DO, la distance entre le plan principal-image et ladite surface de l'objet.

Lorsque la relation (1) est vérifiée, la fibre est parfaitement conjuguée d'elle-même par le système optique — surface réflectrice — optique, même si ladite portion de fibre ne se trouve pas sur ledit axe optique.

En considérant maintenant l'objet à une distance D de l'optique (ou plus exactement du plan principal — image de celle-ci), le flux lumineux φ reçu à l'autre extrémité de la fibre, après réflexion de la lumière sur ladite surface de l'objet est une fonction de D qui passe par un maximum lorsque D est égale à DO.

Lorsque D est voisine de DO, l'approximation suivante est valable :

$$\phi(x) = \phi(0) \cdot (1-Ax^2) \quad (2)$$

où A est une constante et x vaut D-DO.

Sur la figure 2, on a représenté schématiquement une partie d'un capteur conforme à l'invention, prévu pour déterminer la distance D entre la surface plane 8 de l'objet 2 et la lentille 6, à partir de la mesure d'un déplacement z de l'objet, déplacement dont il sera question plus loin.

Ce capteur comprend, outre la lentille 6, une première fibre optique 10 et une seconde fibre optique 12. Ces deux fibres sont parallèles et situées de part et d'autre de l'axe optique de la lentille, en regard de ladite face de l'optique.

La distance entre les axes des fibres est noté e.

Les extrémités respectives des fibres, qui sont en regard de ladite face de la lentille, sont décalées d'une longueur ΔS0 parallèlement à l'axe optique de la lentille (auquel les fibres sont parallèles), l'extrémité de la fibre 10 étant plus proche de la lentille 6 que l'extrémité de la fibre 12.

En désignant par S11 la distance entre la lentille 6 et le plan image P1 de la première fibre 10 par la lentille, et par S12, la distance entre la lentille et le plan-image P2 de la seconde fibre 12 par la lentille, on peut écrire :

$$\Delta S1 = S12 - S11 = -(\Delta S0) \cdot F^{-2} \cdot (S1-F)^2 \quad (3)$$

avec : S1 = (S12 + S11)/2.

Cette formule (3) résulte de l'application d'une formule du type (1) à chacune des fibres 10, 12, laquelle serait en auto-collimation parfaite si la surface plane 8 de l'objet coïncidait avec le plan-image relatif à cette fibre. En posant alors : z = D – S1 (z étant le déplacement considéré de l'objet) et : δ = – 1/2 ΔS1,
on peut faire l'approximation suivante, pour z voisin de 0 et en utilisant une formule du type (2), pour le flux lumineux φ1(z) capté par la première fibre 10 et dû uniquement au flux lumineux émis par cette fibre 10 (en injectant à son autre extrémité une lumière qui se réfléchit ensuite sur l'objet pour être réinjectée dans ladite extrémité de la fibre 10) :

$$\phi1(z) = \phi1(0) \cdot (1 - A1(z + \delta)^2) \quad (4)$$

De même on peut faire l'approximation suivante, pour z voisin de 0 et en utilisant une formule du type (2), pour le flux lumineux $\phi 2(z)$ capté par la seconde fibre 12 et dû uniquement au flux lumineux émis par cette fibre 12 (en injectant à son autre extrémité une lumière qui se réfléchit ensuite sur l'objet pour être réinjectée dans ladite extrémité de la fibre 12) :

$$\phi 2(z) = \phi 2(0) \cdot (1 - A2(z - \delta)^2) \quad (5)$$

les quantités A1 et A2 étant des constantes.

En désignant respectivement par $\varphi 1(z)$ et $\varphi 2(z)$ les quantités $\phi 1(z)/\phi 1(0)$ et $\phi 2(z)/\phi 2(0)$, on peut écrire, pour z voisin de 0 :

$$(\varphi 1(z) - \varphi 2(z))/(\varphi 1(z) + \varphi 2(z)) = a0 + a1 \cdot z + a2 \cdot z^2 \quad (6)$$

a0, a1 et a2 étant des constantes.

Or, on a trouvé que les quantités a0 et a2.z² sont négligeables devant a1.z. Plus précisément, on peut écrire :

$$r.z = (\varphi 1(z) - \varphi 2(z))/(\varphi 1(z) + \varphi 2(z)) \quad (7)$$

autour de z = 0, dans un domaine de quelques millimètres de largeur, notamment pour ΔS0 = 1 mm et F = 20 mm, en notant à présent plus simplement r la constante a1.

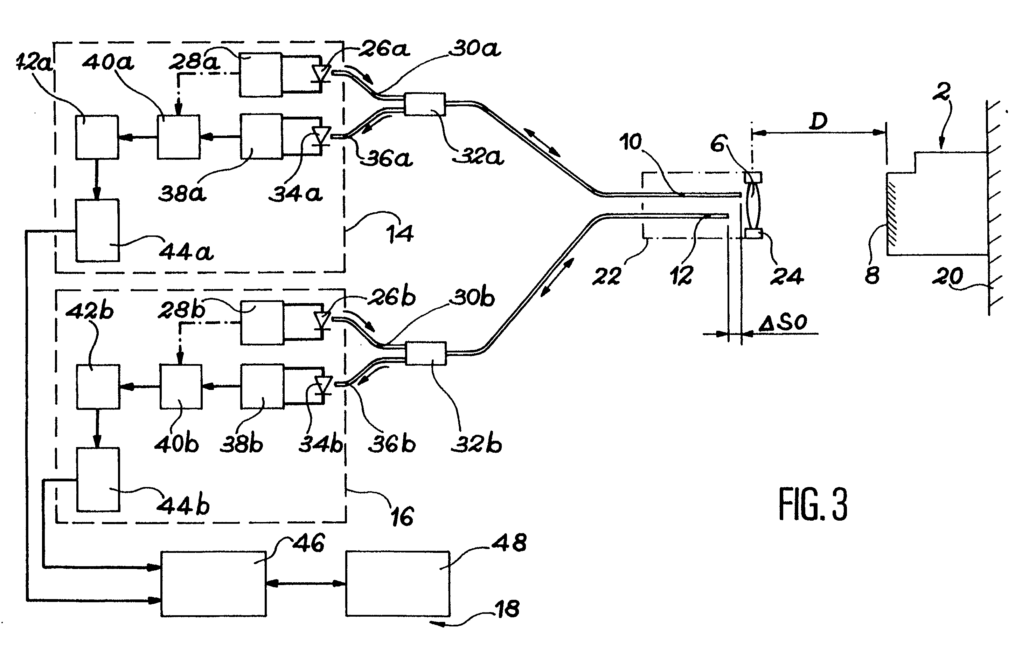

Sur la figure 3, on a représenté schématiquement un mode de réalisation particulier du capteur objet de l'invention. Il comprend, en plus des fibres 10 et 12 et de l'optique 6 déjà mentionnées, des moyens d'émission-réception de lumière 14 associés à la première fibre 10, des moyens d'émission-réception de lumière 16 associés à la seconde fibre 12 et des moyens électroniques de traitement 18.

L'objet 2, dont la surface 8 est à une distance D de la lentille 6, repose par une autre surface parallèle à cette surface 8, contre un support plan 20 dont la distance à l'optique 6 est déterminée avant la mesure.

Les portions des fibres 10 et 12 qui s'étendent respectivement à partir desdites extrémités des fibres, sont parallèles à l'axe optique de la lentille 6, de part et d'autre de cet axe et décalées l'une par rapport à l'autre suivant cet axe, sont par exemple fixées dans des tubes capillaires (non représentés) eux-mêmes fixés dans un tube-support 22 dont l'axe est confondu avec ledit axe optique et qui constitue la "tête de mesure" du capteur.

La lentille 6 est placée à une extrémité du tube-support 22, munie d'un barillet 24 permettant un déplacement de la lentille 6 parallèlement à son axe optique.

Les moyens d'émission-réception 14 (ou 16) comprennent une diode électroluminescente 26a (ou 26b) qui est commandée par une source de courant appropriée 28a (ou 28b) prévue pour que la lumière émise par la diode ait son intensité modulée.

Les fréquences de modulation sont différentes pour les diodes 26a et 26b. Elles valent par exemple respectivement 10 kHz et 12 kHz.

La lumière émise par la diode 26a (ou 26b) est transmise à l'autre extrémité de la fibre 10 (ou 12) par l'intermédiaire d'une fibre optique 30a (ou 30b) et d'un moyen de couplage optique 32a (ou 32b).

La lumière qui émerge de l'autre extrémité de la fibre 10 (ou 12) (après réflexion sur la surface 8) parvient à une photodiode de détection 34a (ou 34b) par l'intermédiaire du moyen de couplage 32a (ou 32b) et d'une fibre optique 36a (ou 36b).

Le moyen de couplage optique 32a (ou 32b) peut comprendre une lame séparatrice ou un coupleur en Y.

La photodiode 34a (ou 34b) est couplée à un circuit de pré-amplification 38a (ou 38b). Le signal fourni par la photodiode est amplifié par ce circuit 38a (ou 38b) et envoyé à l'entrée de moyens de détection synchrone 40a (ou 40b), synchronisés avec la source 28a (ou 28b).

En utilisant deux fréquences de modulation respectivement ajustées à deux valeurs différentes, on obtient ainsi, à la sortie des moyens de détection synchrone 40a (ou 40b) un signal amplifié quine correspond qu'au signal émis par la diode associée 26a (ou 26b).

Le signal de sortie analogique des moyens de détection synchrone 40a (ou 40b) est ensuite filtré par un filtre passe-bas 42a (ou 42b), afin d'éliminer des hautes fréquences parasites, puis amplifié par un amplificateur 44a (ou 44b).

Les moyens électroniques de traitement 18 comprennent un système d'acquisition de données 46 piloté par un microordinateur 48. A titre d'exemple non limitatif, le système 46 est du type HP 3421 et le microordinateur 48 du type HP 86, tous deux commercialisés par la société Hewlett Packard.

Les signaux analogiques issus des amplificateurs 44a et 44b, correspondant respectivement aux flux lumineux $\phi 1(z)$ et $\phi 2(z)$, sont envoyés au système 46 qui acquiert ainsi en permanence ces signaux. La fourniture préalable au microordinateur 48 des quantités S1, r, $\phi 1(0)$ et $\phi 2(0)$, lui permet ainsi de calculer le rapport R :

$$(\varphi 1(z) - \varphi 2(z))/(\varphi 1(z) + \varphi 2(z)).$$

En divisant ce rapport par r le microordinateur peut donc déterminer le déplacement z et en ajoutant S1 au résultat obtenu, la distance D.

La détermination préalable des quantités S1, r, $\phi 1(0)$ et $\phi 2(0)$ est réalisée en effectuant un déplacement relatif de l'objet 2 par rapport à la tête de mesure 22. On obtient ainsi les variations de $\phi 1(z)$ et $\phi 2(z)$ en fonction de D. On en déduit les maxima $\phi 1(0)$ et $\phi 2(0)$ respectifs de $\phi 1(z)$ et $\phi 2(z)$. On peut alors calculer $\varphi 1(z)$ et $\varphi 2(z)$ en fonction de D puis le rapport R. On calcule ensuite la valeur de D pour laquelle R est nul et qui est en fait S1 (z = 0). La quantité r est la valeur absolue de la pente de la droite représentative des variations de R en fonction de D.

Ces quantités sont mémorisées dans le microordinateur et servent de référence au capteur.

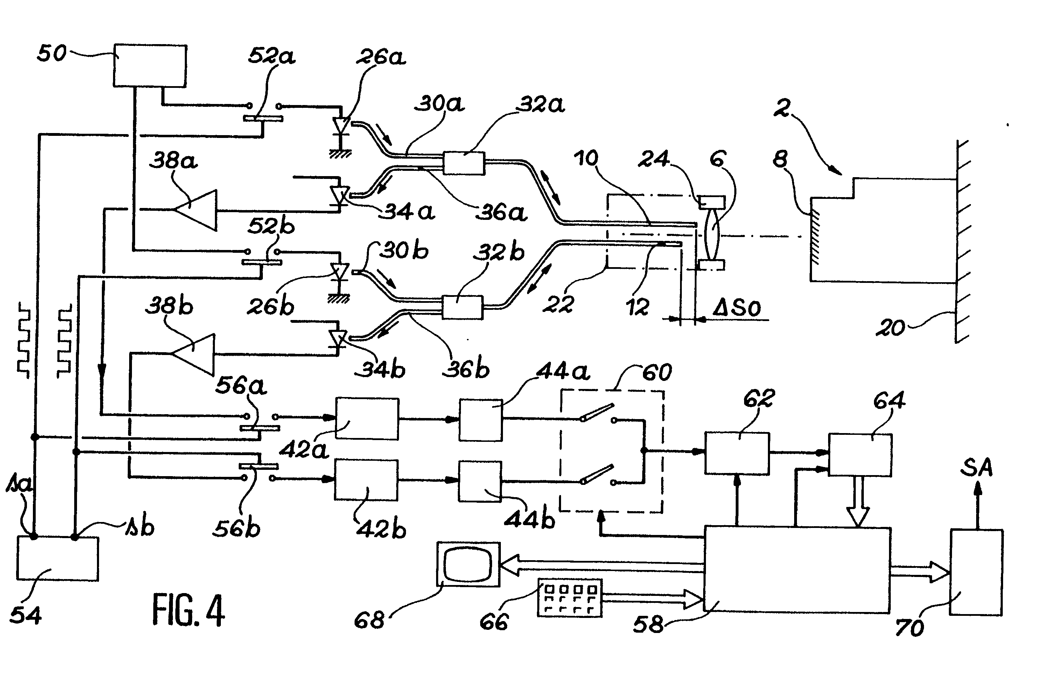

Sur la figure 4, on a représenté schématiquement un autre mode de réalisation particulier du capteur objet de l'invention.

Les éléments 6, 10, 12, 22, 24, 26a, 26b, 30a, 30b, 32a, 32b, 34a, 34b, 36a et 36b sont communs aux réalisations représentées sur les figures 3 et 4.

Les diodes 26a, 26b sont commandées par une même source de courant 50, respectivement par l'intermédiaire de commutateurs 52a, 52b. Ces derniers sont eux-mêmes respectivement commandés par deux sorties sa, sb en opposition de phase d'un oscillateur 54 de fréquence 10 kHz par exemple.

Les sorties des préamplificateurs 38a et 38b (qui amplifient les signaux respectivement fournis par les photodiodes 34a et 34b) sont respectivement reliées aux filtres 42a et 42b à travers des commutateurs 56a et 56b qui sont respectivement commandés par les sorties sa et sb de l'oscillateur 54.

A partir des signaux de sortie des filtres 42a et 42b, les amplificateurs 44a et 44b fournissent des tensions analogiques qui peuvent être comprises entre 0 et 10V.

Le capteur représenté sur la figure 4 est géré par un microprocesseur 58 par exemple du type 8085 de la société INTEL. Ce microprocesseur fait l'acquisition des signaux de sortie des amplificateurs 44a et 44b (correspondant respectivement aux quantités $\phi1(z)$ et $\phi2(z)$), successivement par l'intermédiaire d'un multiplexeur à deux voies 60, d'un circuit d'échantillonnage et de maintien 62 ("sample and hold" selon la terminologie anglo-saxonne) et d'un convertisseur analogique-numérique 64.

Le multiplexeur 60 permet l'acquisition d'une voie après l'autre par le microprocesseur et le circuit 62 mémorise suffisamment longtemps la valeur analogique correspondant à la voie ainsi acquise pour que le convertisseur 64 puisse la convertir sous forme numérique.

Le microprocesseur 58 est également associé à un clavier 66 qui permet notamment les initialisations, à des moyens de visualisation des résultats des mesures 68 et éventuellement à une sortie analogique SA, par l'intermédiaire d'un convertisseur numérique-analogique 70.

Comme précédemment, le microprocesseur 58 calcule le rapport :

$$\varphi1(z) - \varphi2(z))/(\varphi1(z) + \varphi2(z))$$

le divise par r pour obtenir le déplacement z et ajoute S1 au résultat obtenu pour obtenir D.

## Revendications

1. Capteur optique, pour déterminer le déplacement par rapport à ce capteur, d'un objet optiquement réflecteur (2) dans un domaine donné de longueurs d'ondes optiques, ledit capteur comprenant :

— une optique (6), l'objet étant destiné à être placé en regard d'une face de cette optique,

— une première (10) et une seconde (12) fibres optiques qui sont à des distances prédéterminées par rapport à l'optique et sont situées de part et d'autre de l'axe optique de ladite optique, et dont des extrémités respectives sont placées en regard de l'autre face de l'optique et sont décalées l'une par rapport à l'autre suivant ledit axe optique,

— des premiers moyens d'émission de lumière (26a), de longueur d'onde appartenant audit domaine, et d'injection de cette lumière dans l'autre extrémité de la première fibre, en vue de l'envoyer sur l'objet par l'intermédiaire de l'optique,

— des premiers moyens de récupération de lumière et de détection (34a) de la lumière renvoyée à l'autre extrémité de la première fibre après réflexion sur l'objet, les premiers moyens de détection étant prévus pour fournir alors un premier signal électrique,

— des seconds moyens d'émission de lumière (26b), de longueur d'onde appartenant audit domaine, et d'injection de cette lumière dans l'autre extrémité de la seconde fibre, en vue de l'envoyer sur l'objet par l'intermédiaire de l'optique,

— des seconds moyens de récupération de lumière et de détection (34b) de la lumière renvoyée à l'autre extrémité de la seconde fibre après réflexion sur l'objet, les seconds moyens de détection étant prévus pour fournir alors un second signal électrique, et

— des moyens électroniques de traitement (18, 58) de ces premier et second signaux, prévus pour déterminer à partir de ces derniers le déplacement de l'objet par rapport à l'optique.

2. Capteur selon la revendication 1, caractérisé en ce que le déplacement z de l'objet (2) par rapport à l'optique (6) est déterminé par les formules suivantes :

$$r.z = (A - B)/(A + B)$$
$$A = \phi1/\phi10$$
$$B = = \phi2/\phi20$$

r étant une constante de proportionnalité, $\phi1$ et $\phi10$ désignant respectivement les flux lumineux reçus à l'autre extrémité de la première fibre (10) pour un objet à une distance D et un objet à une distance S1 avec : $D = z + S1$ et : $S1 = (S11 + S12)/2$ S11 et S12 désignant respectivement les distances de l'optique aux plans images respectifs des extrémités des première et seconde fibres par l'optique, et $\phi 2$ et $\phi 20$ désignant respectivement les flux lumineux reçus à l'autre extrémité de la seconde fibre (12) pour un objet à cette distance D et un objet à cette distance S1.

3. Capteur selon la revendication 2, caractérisé en ce que les moyens électroniques de traitement (18, 58) sont également prévus pour déterminer la distance D à partir de z et de S1.

4. Capteur selon l'une quelconque des revendications 1 à 3, caractérisé en ce que les premiers moyens d'émission (26a) sont prévus pour moduler l'intensité de la lumière leur correspondant à une première fréquence, en ce que les premiers moyens de détection (34a) sont prévus pour effectuer une détection synchrone de cette lumière dont l'intensité est ainsi modulée, en ce que les seconds moyens d'émission (26b) sont prévus pour moduler l'intensité de la lumière leur correspondant à une seconde fréquence différente de la première fréquence, et en ce que les seconds moyens de détection (34b) sont prévus pour effectuer une détection synchrone de cette lumière dont l'intensité est modulée à la seconde fréquence.

5. Capteur selon l'une quelconque des revendications 1 3, caractérisé en ce que les premiers et seconds moyens d'émission (26a, 26b) sont prévus pour émettre respectivement des lumières dont les intensités sont modulées et sont en opposition de phase et en ce que les premiers et seconds moyens de détection (34a, 34b) sont prévus pour effectuer une détection synchrone des lumières respectivement émises par les premiers et seconds moyens d'émission.

6. Capteur selon l'une quelconque des revendications 1 à 5, caractérisé en ce qu'il comprend en outre des moyens (24) de déplacement de l'optique (6) parallèlement à son axe optique.

## Patentansprüche

1. Optischer Sensor zum Bestimmen der Bewegung eines optisch in einem vorgegebenen Wellenlängenbereich reflektierenden Objekts (2) bezüglich dieses Sensors, wobei der Sensor umfaßt :
— eine Optik (6), wobei das Objekt dazu bestimmt ist, gegenüber einer Seite dieser Optik angeordnet zu werden,
— eine erste (10) und eine zweite (12) optische Fasern, die in einem vorgegebenen bestand von der Optik sind und auf der einen und anderen Seite der optischen Achse der Optik angeordnet sind und deren Jeweilige Enden gegenüber der anderen Seite der Optik angeordnet und gegenseitig entlang der optischen Achse versetzt sind,
— erste Vorrichtungen zur Emission von Licht (26a) einer zu diesem Bereich gehörenden Wellenlänge und zum Einführen dieses Lichts in das andere Ende der ersten Faser, um es über die Optik auf das Objekt zu schicken,
— erste Lichtauffang- und Detektionsvorrichtungen (34a) für das Licht, das von dem anderen Ende der ersten Faser nach Reflexion an dem Objekt zurückgesandt wird, wobei die ersten Detektionsvorrichtungen vorgesehen sind, ein erstes elektrisches Signal zu erzeugen,
— zweite Vorrichtungen zur Emission von Licht (26b) einer zu diesem Bereich gehörenden Wellenlänge und zum Einführen dieses Lichts in das andere Ende der zweiten Faser, um es über die Optik auf das Objekt zu schicken,
— zweite Lichtauffang- und Detektionsvorrichtungen (34b) für das Licht, das von dem anderen Ende der zweiten Faser nach Reflexion an dem Objekt zurückgesandt wird, wobei die zweiten Detektionsvorrichtungen vorgesehen sind, ein zweites elektrisches Signal zu erzeugen, und
— elektronische Verarbeitungsvorrichtungen (18, 58) für diese ersten und zweiten Signale, die vorgesehen sind, ausgehend von den letzteren die Bewegung des Objekts bezüglich der Optik zu bestimmen.

2. Sensor nach Anspruch 1, dadurch gekennzeichnet, daß die Bewegung z des Objekts (2) bezüglich der Optik (6) durch die folgenden Formeln bestimmt wird :

$$rz = (A - B)/(A + B)$$
$$A = \varphi 1/\varphi 10$$
$$B = \varphi 2/\varphi 0$$

wobei r eine Proportionalitätskonstante ist, $\varphi 1$ und $\varphi 10$ jeweils den am anderen Ende der ersten Faser (10) empfangenen Lichtfluß für ein Objekt mit einem Abstand D und ein Objekt mit einem bestand S1 angibt mit : D = z + S1 und S1 = (S11 + S12)/2, wobei S11 und S12 jeweils die Abstände der Optik zu den jeweiligen Bildebenen der Enden der ersten und zweiten Fasern durch die Optik angeben, und wobei $\varphi 2$ und $\varphi 20$ jeweils den am anderen Ende der zweiten Faser (12) empfangenen Lichtfluß für ein Objekt in diesem bestand D und ein ObJekt in diesem bestand S1 angeben.

3. Sensor nach Anspruch 2, dadurch gekennzeichnet, daß die elektronische Verarbeitungsvorrichtungen (18, 58) ebenfalls dazu vorgesehen sind, den bestand D ausgehend von z und S1 zu bestimmen.

4. Sensor nach einem der Ansprüche 1 bis 3, dadurch gekennzeichnet, daß die ersten Emissionsvorrichtungen (26a) vorgesehen sind, die Intensität des ihnen entsprechenden Lichts mit einer ersten Frequenz zu modulieren, daß die ersten Detektionsvorrichtungen (34a) vorgesehen sind, eine synchrone Detektion für dieses Licht, dessen Intensität derart moduliert ist, durchzuführen, daß die zweiten Emissionsvorrichtungen (26b) vorgesehen sind, die Intensität des ihnen entsprechenden Lichts mit einer zweiten, von der ersten Frequenz verschiedenen Frequenz zu modulieren, und daß die zweiten Detektionsvorrichtungen (34b) vorgesehen sind, eine synchrone Detektion für dieses Licht, dessen Intensität mit der zweiten Frequenz moduliert ist, durchzuführen.

5. Sensor nach einem der Ansprüche 1 bis 3, dadurch gekennzeichnet, daß die ersten und zweiten Emissionsvorrichtungen (26a, 26b) vorgesehen sind, jeweils Licht auszusenden, dessen Intensität moduliert ist und das in der Phase entgegengesetzt ist und daß die ersten und zweiten Detektionsvorrichtungen (34a, 34b) vorgesehen sind, eine synchrone Detektion des jeweils von den ersten und zweiten Emissionsvorrichtungen emittierten Lichts durchzuführen.

6. Sensor nach einem der Ansprüche 1 bis 5, dadurch gekennzeichnet, daß er außerdem Vorrichtungen (24) zur Bewegung der Optik (6) parallel zu ihrer optischen Achse umfaßt.

## Claims

1. Optical transducer for determining the displacement, relative to said transducer, of an object (2) reflecting optically in a given range of optical wavelengths, said transducer comprising :

an optical system (6), the object being positioned facing one face of said optical system,

a first (10) and a second (12) optical fibres at predetermined distances with respect to the optical systems and located on either side of the optical axis of said optical system and whereof the respective ends are positioned facing the other face of the optical system and are reciprocally staggered along said optical axis,

first means (26a) for emitting light of a wavelength belonging to said range and for injecting said light into the other end of the first optical fibre with a view to supplying it to the object via the optical system,

first means (34a) for the recovery of light and for detecting the light returned to the other end of the first fibre after reflection on the object, the first detection means then supplying a first electric signal, second means (26b) for emitting light of a wavelength belonging to said range and for injecting said light into the other end of the second fibre with a view to supplying it to the object via the optical system, second means (34b) for the recovery of light and for the detection of light returned to the other end of the second fibre after reflection on the object, the second detection means then supplying a second electric signal and means (18, 58) for the electronic processing of said first and second signals for determining on the basis of the latter the displacement of the object relative to the optical system.

2. Transducer according to claim 1, characterized in that the displacement z of the object (2) relative to the optical system (6) is determined by the following optical formulas :

$$r.z. = (A - B)/(A + B)$$
$$A = \phi1/\phi10$$
$$B = \phi2/\phi20$$

r being a proportionality constant, $\phi1$ and $\phi10$ respectively designating the light fluxes received at the other end of the first fibre (10) for an object at a distance D and an object at a distance S1 with : D = z + S1 and S1 = (S11 + S12)/2, S11 and S12 respectively designating the distances from the optical system to the respective image planes of the ends of the first and second fibres through the optics and $\phi2$ and $\phi20$ respectively designate the light fluxes received at the other end of the second fibre (12) for an object at said distance D and an object at said distance S1.

3. Transducer according to claim 2, characterized in that the electronic processing means (18, 58) also determine the distance D on the basis of z and S1.

4. Transducer according to any one of the claims 1 to 3, characterized in that the first emission means (26a) modulate the intensity of the light corresponding thereto at a first frequency, the first detection means (34a) performing a synchronous detection of said light having an intensity modulated in this way, the second emission means (26b) modulating the intensity of the light corresponding thereto at a second frequency differing from the first frequency and second detection means (34b) perform a synchronous detection of said light whose intensity is modulated at the second frequency.

5. Transducer according to any one of the claims 1 to 3, characterized in that the first and second emission means (26a, 26b) respectively emit lights, whose intensities are modulated and are in phase opposition and in that the first and second detection means (34a, 34b) perform a synchronous detection of the lights respectively emitted by the first and second emission means.

6. Transducer according to any one of the claims 1 to 5, characterized in that it also comprises means (24) for displacing optical system (6) parallel to its optical axis.

FIG. 1

FIG. 2

EP 0 291 394 B1

FIG. 3

EP 0 291 394 B1

FIG. 4

EP 0 291 394 B1